# EUROPÄISCHE PATENTANMELDUNG

(11) **EP 2 756 916 A1**
(43) Veröffentlichungstag der Anmeldung: **23.07.2014**
(21) Anmeldenummer: 13151866.4
(22) Anmeldetag: 18.01.2013
(51) Int. Cl.: B23P 6/04, B23K 26/00, F01D 5/00

(54) **Zweimaliges Umschmelzen unter verschiedenen Richtungen**

(71) Anmelder: Siemens Aktiengesellschaft, 80333 München (DE)
(72) Erfinder: Burbaum, Bernd, 14612 Falkensee (DE); Melzer-Jokisch, Torsten, 15366 Neuenhagen bei Berlin (DE); Ott, Michael, 45470 Mülheim an der Ruhr (DE); Piegert, Sebastian, 10777 Berlin (DE)

(57) **Zusammenfassung**

Durch das zweite Umschmelzen in einer anderen Verfahrrichtung wird die Mikrostruktur von Polykristallin erstarrten Umschmelzbereichen günstig eingestellt zu den erwarteten thermomechanischen Eigenschaften.

## Beschreibung

Die Erfindung betrifft das Umschmelzen von Rissen, das zweimal durchgeführt wird, wobei die Verfahrrichtung geändert wird.

Bei Service beanspruchten Komponenten hergestellt aus polykristallin erstarrten Nickelbasis-Superlegierungen ist ein Reparaturumschmelzen von durchgehenden Rissen mittels Laserstrahlung angestrebt, um die mechanischen Eigenschaften der zu reparierenden Komponenten im Bereich des Grundwerkstoffs zu erhalten. Das Laserstrahl-Umschmelzen eignet sich zudem zur Beseitigung von Oberflächenporosität und Rissen in Neubauteilen. Aufgrund der Erstarrungsbedingungen (Temperaturgradient und Erstarrungsgeschwindigkeit) im Schmelzbad bilden sich in Verfahrrichtung der Laserstrahlung lange, schmale Kristalle (Stängelkristalle) in der umgeschmolzenen Zone aus, die ungünstig liegen zur späteren mechanischen Belastung.

Es ist daher Aufgabe der Erfindung, o. g. Problem zu lösen.

Die Aufgabe wird gelöst durch ein Verfahren gemäß Anspruch 1. Durch die Richtungsänderung beim zweiten Umschmelzen wachsen die Kristalle vorteilhafterweise in der gewünschten Richtung.

In den Unteransprüchen sind weitere vorteilhafte Maßnahmen aufgelistet, die beliebig miteinander kombiniert werden können, um weitere Vorteile zu erzielen.

Es zeigen:

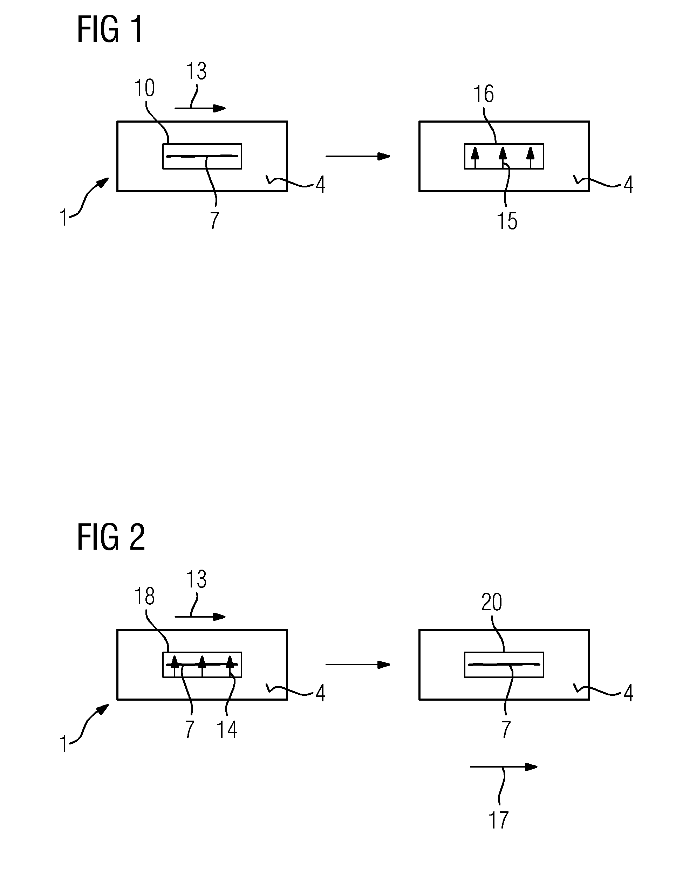

- Figuren 1, 2: schematisch den Ablauf des erfindungsgemäßen Verfahrens.

Die Beschreibung und die Figuren stellen nur Ausführungsbeispiele der Erfindung dar.

In Figur 1 links ist ein Bauteil 1, vorzugsweise eine Turbinenschaufel aus einer nickel- oder kobaltbasierten Superlegierung, gezeigt, das an einer Oberfläche 4 einen Riss 7 in einer Längsrichtung 13 aufweist.
Das Substrat 4 bzw. das Bauteil ist vorzugsweise polykristallin.
Der Riss 7 soll durch Umschmelzen, insbesondere durch Laserstrahlumschmelzen verschlossen werden.
Dabei wird in einer ersten Verfahrrichtung 13 (gleich Längsrichtung 13 Riss 7) längs des Risses 7 ein erster Umschmelzbereich 10 erzeugt, der den Riss 7 umschließt und verschließt.

Der Riss 7 in Figur 1 links ist hier nur angedeutet, da dieser nicht mehr vorhanden ist, wenn ein erster Umschmelzbereich 10 erzeugt wurde.

Der erste Umschmelzbereich 10 wird nochmals umgeschmolzen, um einen zweiten Umschmelzbereich 16 zu erzeugen, wobei der Umschmelzbereich 10 in einer zweiten Verfahrrichtung 15 noch mal aufgeschmolzen wird.

Die zweite Verfahrrichtung 15 ist in einem deutlich von 0° verschiedenen Winkel zur Verfahrrichtung 13 gegeben. Hier ist der Winkel vorzugsweise senkrecht dazu.
Zwar zeigt dieses Beispiel in Figur 1 rechts, dass der erste Umschmelzbereich 10 immer wieder von einer Seite aus zur anderen Seite aus umgeschmolzen wird, jedoch kann man den ersten Umschmelzbereich 10 auch von der anderen Seite umschmelzen oder mäanderförmig abfahren.

Ein anderes Beispiel ist in der Figur 2 dargestellt, bei dem ein erster Umschmelzbereich 14 durch Umschmelzen schräg oder senkrecht zur Längsrichtung 13 des Risses 7 in Richtung 14 zum Riss 7 erzeugt wurde.

Der Riss 7 in Figur 2 links, rechts ist hier nur angedeutet, da dieser nicht mehr vorhanden ist, wenn ein erster Umschmelzbereich 18 erzeugt wurde.

Um das Problem zu lösen, wird, falls erforderlich, der erste Umschmelzbereich 18 noch mal umgeschmolzen in einem zweiten Umschmelzbereich 20, wobei dann die Verfahrrichtung 17 wieder unter einem anderem, deutlich von 0° verschiedenen Winkel zu der ersten Verfahrrichtung 14 erfolgt und hier vorzugsweise längs des ursprünglichen Risses 7 erfolgt.

Die ersten und zweiten Umschmelzbereiche 10, 18, 16, 20 sind vorzugsweise polykristallin.

So richten sich die Stängelkristalle in der gewünschten Richtung aus.

## Patentansprüche

1. Verfahren
zum Umschmelzen von Rissen (7),
bei dem zuerst der Riss (7) in einer ersten Verfahrrichtung (13, 14) umgeschmolzen wird und
ein erster Umschmelzbereich (10, 18) erzeugt wird und
ein nochmaliges Umschmelzen des ersten Umschmelzbereiches (10, 18) entlang einer zweiten Verfahrvorrichtung (15, 17) erfolgt,
wobei die zweite Verfahrrichtung (15, 17) unter einem deutlich von 0° verschiedenen Winkel zur ersten Verfahrrichtung (13, 14) erfolgt.

2. Verfahren nach Anspruch 1,
bei dem ein Laserstrahlumschmelzen erfolgt.

3. Verfahren nach einem oder beiden der Ansprüche 1 oder 2,
bei dem die zweite Verfahrrichtung (15, 17) unter einem Winkel von 90° +/- 10° zur ersten Verfahrrichtung (13, 14) erfolgt.

4. Verfahren nach einem oder mehreren der vorherigen Ansprüche 1 bis 3,
bei dem ein polykristallines Substrat umgeschmolzen wird.

5. Verfahren nach einem oder mehreren der vorherigen Ansprüche 1 bis 4,
bei dem der erste und/oder zweite Umschmelzbereich (10, 18, 16, 20) polykristallin ausgebildet wird.
